# EUROPÄISCHE PATENTSCHRIFT

(11) **EP 1 014 655 B1**
(45) Veröffentlichungstag und Bekanntmachung des Hinweises auf die Patenterteilung: **08.06.2005**
(21) Anmeldenummer: 99117660.3
(22) Anmeldetag: 07.09.1999
(51) Int. Cl.: H04M 1/20, H04R 1/38

(54) **Anordnung zur Unterdrückung von akustischen Reflexionen bei Handapparaten der Fernsprechtechnik**
Arrangement for suppressing acoustic reflections in telephone handsets
Dispositif de suppression des reflexions acoustiques dans les combinés téléphoniques

(30) Priorität: 07.09.1998 DE 19840827
(43) Veröffentlichungstag der Anmeldung: 28.06.2000
(73) Patentinhaber: SIEMENS AKTIENGESELLSCHAFT, 80333 München (DE)
(72) Erfinder: Petersen, Holger, 85669 Pastetten (DE)

(56) Entgegenhaltungen:
- EP-A- 0 753 982
- WO-A-95/05715
- WO-A-97/00592

## Beschreibung

Die Erfindung betrifft eine Anordnung zur Unterdrückung von akustischen Reflexionen bei Handapparaten der Fernsprechtechnik.

Für eine einwandfreie Kommunikation zwischen zwei Telefonpartnern ist es wichtig, daß ein Fernsprechgerät möglichst wenig vom ankommenden Signal reflektiert. Reflexionen entstehen nicht nur im Bereich der Fernsprechgeräteschaltung, sondern auch im Bereich des Handapparates. Insbesondere wird von der Sprechkapsel das akustische Signal der Hörkapsel empfangen und wieder auf die Fernsprechleitung übertragen. Der Telefonbenutzer hat dann den Eindruck von Reflexionen, Halligkeit und Echos.

Der Grund dafür ist u. a. eine geringe akustische Dämpfung zwischen Hörmuschel und Mikrofon bei Handapparaten aufgrund von Schallabstrahlung in der Hörerinnenseite (Rückkopplung).

Ein weiterer Nachteil besteht darin, daß insbesondere schnurlose Telefone und Mobiltelefone heute derart stark miniaturisiert sind, daß Probleme bei der Abstrahlung tiefer Frequenzen unter 1 kHz auftreten. Dies wird durch ein unergonomisches Design verstärkt, bei dem im praktischen Gebrauch ein Luftspalt zwischen Hörmuschel und Ohr auftritt.

Zur Lösung des oben angesprochenen Problems bezüglich der geringen akustischen Dämpfung sind mehrere Möglichkeiten bekannt.

Figur 5 zeigt eine erste bekannte Lösungsmöglichkeit, wie sie z.B. aus der WO-A-95/05715 bekannt ist, und bei der in einem Handapparat 1 mit einer vorhandenen Gehäuseundichtigkeit 7 ein Mikrofon 4 und eine abgedichtete Hörkapsel 5 eingebaut ist. Die schalldichte Hörkapsel 5 ist dicht mit dem Handapparategehäuse verbunden, und aufgrund einer dichten Rückseite wird kein direkter Schall in das Handapparategehäuse abgestrahlt.

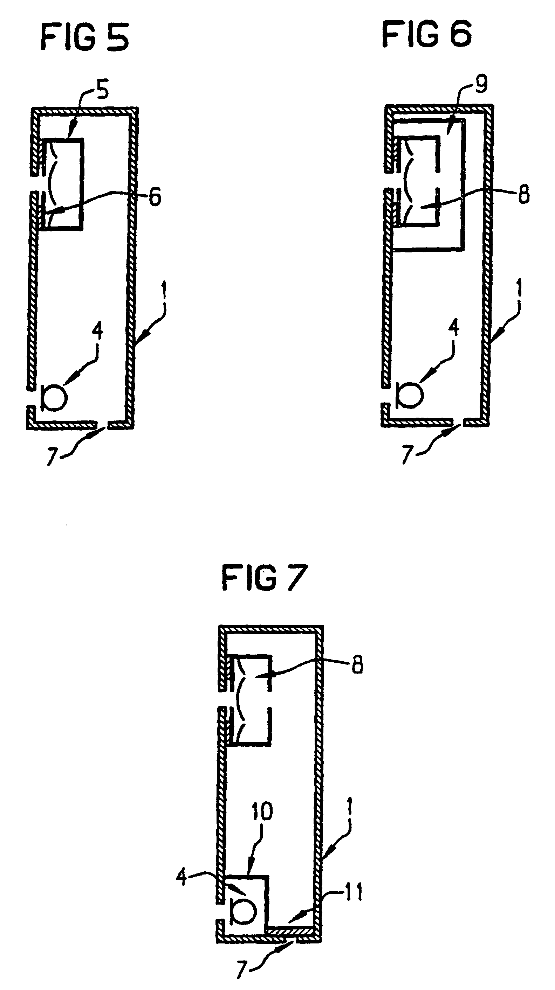

Eine zweite Lösungsmöglichkeit ist in Figur 6 dargestellt, bei welcher eine offene Hörkapsel mittels einer Hörkapselung mit einem bestimmten Volumen schalldicht gegenüber dem Inneren des Handapparates abgeschirmt ist, so daß kein oder weniger Schall in das Handapparategehäuse entweichen kann.

Eine dritte Lösungsmöglichkeit ist in Figur 7 gezeigt, bei der in dem Handapparat 1 eine nach hinten hin offene Hörkapsel 8 eingebaut ist, gleichzeitig aber das Mikrofon 4 mit einer Mikrofonkapsel 10 gegenüber dem Handapparategehäuseinneren abgeschirmt wird und zusätzlich die Gehäuseundichtigkeit 7 mittels einer Gehäuseabdichtung 11 abgedichtet wird. Durch die Abdichtung des Mikrofons und des Handapparategehäuses kann kein oder weniger Schall auf der Hörerinnenseite zum Mikrofon gelangen und kein oder weniger Schall durch Öffnung des Telefongehäuses in Richtung des Mikrofons abgestrahlt werden.

Die Figuren 8 und 9 zeigen Lösungsmöglichkeiten, von denen eine z.B. unter anderem aus der EP-A-0 753 982 bekannt ist, bezüglich der besseren Abstrahlung tiefer Frequenzen durch den Einsatz akustisch niederimpedanter Hörkapselprinzipien. Diese benötigen ein definiertes Rückvolumen und bestimmte Leckelemente.

Für die akustisch niederimpedanten Hörkapselprinzipien werden Wandler mit verstärkter Tiefenabstrahlung eingesetzt. Durch die Integration eines künstlichen Leckspaltes zwischen Hörkapsel und Ohr wird diese Überhöhung reduziert, so daß sich wieder ein gleichmäßiger Frequenzgang ergibt. In der Praxis auftretende Lecks zwischen dem Telefongehäuse und dem Ohr verändern dann die akustische Abstrahlung des Telefonhörers nur noch geringfügig, wobei die Abstrahlung der tiefen Frequenzen erhalten bleibt. Die Voraussetzung für die verstärkte Tiefenabstrahlung des Wandlers ist eine Öffnung der Hörkapselrückseite, d. h. eine Öffnung des Volumens auf der Membranrückseite. Dies gilt verstärkt bei der Verkleinerung der Hörkapselabmessungen.

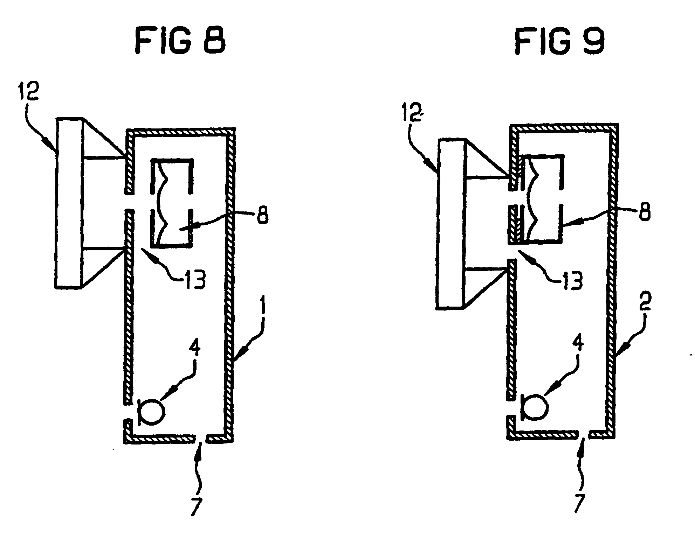

Die Figuren 8 und 9 zeigen den Leckspalt 13, welcher in Figur 8 dadurch erzeugt wird, daß die Hörkapsel innen nicht direkt an der Handapparatgehäusewand angebracht ist, und in Figur 9 dadurch erreicht wird, daß unterhalb der Hörkapsel 8 in der Gehäusewand eine Öffnung innerhalb der Auflagefläche des Ohres 12, welche einen Kreis mit einem Durchmesser von 25 mm ist, welcher den Schallaustritt der Hörkapsel enthält, geschaffen wird.

Die Öffnung auf der Hörkapselrückseite steht aber konträr zu dem oben angesprochenen Problem bezüglich der geringen akustischen Dämpfung, denn sie führt zu einer Schallabstrahlung von der Membranrückseite in das Gehäuseinnere des Handapparates. Bei Handapparategehäusen ohne größere Öffnungen ins Freie erreicht der Schalldruck innerhalb des Handapparategehäuses deshalb zum Teil höhere Werte als außen an der Hörmuschel.

Aufgabe der vorliegenden Erfindung ist es eine Anordnung der eingangs genannten Art anzugeben, bei der die niederimpedanten Hörkapselprinzipien angewendet werden können, welche aber gleichzeitig eine große akustische Dämpfung zwischen Hörkapsel und Mikrofon erreicht.

Diese Aufgabe wird bei der eingangs genannten Anordnung dadurch gelöst, daß ein gegenüber dem Gehäuseinneren abgedichteter Kanal das rückwärtige Raumvolumen der Hörkapsel mit dem Außenvolumen des Handapparates verbindet, wobei der Kanal außerhalb der eigentlichen Hörmuschel austritt.

Durch die erfindungsgemäße Einführung eines Schallkanals von der Rückseite der Hörkapselmembran zur Telefonaußenseite außerhalb der Hörmuschel wird eine breitbandige akustische Abstrahlung sowie eine Miniaturisierung des Handapparates möglich. Die akustisch niederimpedante Integration wird möglich, ohne daß Schall ins Handapparateinnere abgestrahlt wird. Durch den erfindungsgemäßen Kanal ist weder innerhalb der Hörkapsel noch innerhalb des Handapparates ein besonderes Rückvolumen für die verstärkte Tiefenabstrahlung notwendig. Die Hörkapsel besitzt bei der erfindungsgemäßen Anordnung ein unendlich großes Rückvolumen und kann deshalb tiefenbetont auch bei kleineren Hörkapseln abstrahlen.

Eine zweckmäßige Weiterbildung der Erfindung ist dadurch gekennzeichnet, daß der Kanal an der Handapparateoberseite austritt. Das ist besonders günstig für eine gute akustische Dämpfung zwischen Hörkapsel und Mikrofon.

Eine weitere zweckmäßige Ausgestaltung der Erfindung ist dadurch gekennzeichnet, daß ein akustisch niederimpedanter Aufbau vorgesehen ist, bei dem innerhalb der Auflagefläche des Ohres, welche einen Kreis mit einem Durchmesser von 25 mm bildet, welcher den Schallaustritt der Hörkapsel enthält, in der Gehäusewand des Handapparates eine Lecköffnung vorgesehen ist. Dadurch ergibt sich eine deutliche Reduktion der Schallemission der Hörkapsel in das Telefongehäuse.

Eine andere zweckmäßige Ausgestaltung der vorliegenden Erfindung ist dadurch gekennzeichnet, daß ein akustisch niederimpedanter Aufbau vorgesehen ist, wobei innerhalb der Auflagefläche des Ohres, welche einen Kreis mit einem Durchmesser von 25 mm bildet, welcher den Schallaustritt der Hörkapsel enthält, in der Gehäusewand des Handapparates eine Lecköffnung vorgesehen ist, wobei der Raum hinter der Lecköffnung mit dem Kanalinnenraum verbunden ist, während er gegenüber dem übrigen Gehäuseinneren des Handapparates abgedichtet ist.

Dadurch erfolgt keine Schallemission der Hörkapsel in das Telefongehäuse.

Die Erfindung wird nachfolgend anhand mehrerer in der Zeichnung dargestellter Ausführungsbeispiele beschrieben. In der Zeichnung sind alle Ausführungsbeispiele mittels eines schematischen Querschnitts durch einen Handapparat dargestellt.

Es zeigen
Figur 1 einen erfindungsgemäßen Handapparat,
Figur 2 einen erfindungsgemäßen Handapparat mit einer ersten Lecköffnung,
Figur 3 einen erfindungsgemäßen Handapparat mit einer zweiten Lecköffnung,
Figur 4 eine weitere Ausgestaltung des in Figur 1 gezeigten erfindungsgemäßen Handapparates,
Figur 5 einen bekannten Handapparat mit einer abgedichteten Hörkapsel,
Figur 6 einen bekannten Handapparat mit einer offenen gekapselten Hörkapsel,
Figur 7 einen bekannten Handapparat mit einem gekapselten Mikrofon und einem abgedichteten Gehäuse,
Figur 8 einen bekannten Handapparat, bei welchem ein akustisch niederimpedantes Hörkapselprinzip angewendet wird, und
Figur 9 einen bekannten Handapparat, bei dem ebenfalls das akustische niederimpedante Hörkapselprinzip angewendet wird.

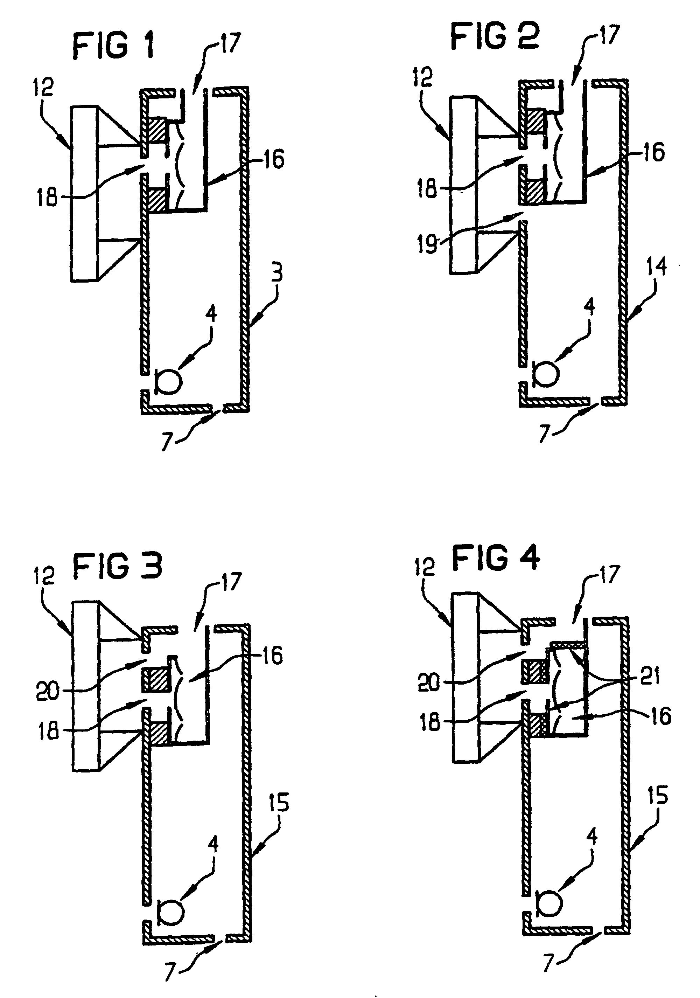

Die Figuren 1 bis 4 zeigen Ausführungsbeispiele für erfindungsgemäße Handapparate.

An dieser Stelle soll festgehalten werden, daß wenn hier von einem Handapparat gesprochen wird, es sich dabei selbstverständlich auch um ein Mobilfunkgerät oder ein schnurloses Telefon handeln kann.

Figur 1 zeigt einen erfindungsgemäßen Handapparat 3, bei welchem das rückwärtige Raumvolumen der Hörkapsel 16 über einen abgedichteten Kanal 17 mit dem Außenvolumen des Handapparates 3 verbunden ist. Hierbei ist es besonders günstig, wenn der Kanal 17 an der Handapparateoberseite austritt.

Figur 2 zeigt ein Ausführungsbeispiel gemäß der vorliegenden Erfindung, bei welchem der akustische niederimpedante Aufbau angewendet wird. Das heißt, die Vorderseite der Hörkapsel muß mit der Rückseite akustisch verbunden sein, wobei das Ohr und die Vorderseite der Hörkapsel keinen völligen Abschluß bilden dürfen. Der Handapparat 14 von Figur 2 besitzt wiederum eine Hörkapsel 16 mit einem Kanal 17, wobei die Hörkapsel beabstandet zur Gehäuseinnenseite mit dem Schallaustritt 18 angeordnet ist. Zusätzlich verfügt der Handapparat in Figur 2 über eine Lecköffnung 19, welche das Außenvolumen des Handapparats 14 mit dem Innenraum des Handapparates 14 verbindet.

Figur 3 zeigt ein weiteres Ausführungsbeispiel, bei welchem ein Handapparat 15 mit einer Lecköffnung 20 innerhalb der Auflagefläche des Ohres 12, welche einen Kreis mit einem Durchmesser von 25 mm bildet, welcher den Schallaustritt 18 der Hörkapsel 16 enthält. Diese Lecköffnung 20 ist mit einem Gehäusevolumenteil verbunden, welches mit dem Kanalinnenraum verbunden ist, während es gegenüber dem übrigen Gehäuseinneren des Handapparates 15 abgeschirmt ist.

Figur 4 zeigt ein weiteres Ausführungsbeispiel des erfindungsgemäßen Handapparates bei welchem Fließe 21, welche als Schutzabdeckungen auf der Hörkapsel dienen, gezielt als akustische Impedanzen zur Abstimmung des akustischen Frequenzganges sowie des Leckverhaltens verwendet werden.

Durch gezielte Dimensionierung der Schallaustrittsöffnungen und des Hauptvolumens des Hauptvorvolumens der Hörkapsel können Resonatoren zur Abstimmung der akustischen Abstrahlung eingesetzt werden.

Weiterhin kann durch eine gezielte Abstimmung der Schallaustrittsöffnungen und des Hauptvolumens ein Druckkammerprinzip zur Erhöhung des Wirkungsgrades der Hörkapsel realisiert werden.

Durch gezielte Dimensionierung der Rückschallöffnungen der Hörkapsel und des Handapparategehäuses, des Membranrückvolumens sowie des Kanalvolumens können Resonatoren zur Abstimmung der akustischen Abstrahlung, sowie des Leckverhaltens realisiert werden.

## Patentansprüche

1. Anordnung zur Unterdrückung von akustischen Reflexionen bei Handapparaten der Fernsprechtechnik,
**dadurch gekennzeichnet,**
**daß** ein gegenüber dem Gehäuseinneren abgedichteter Kanal (17) das rückwärtige Raumvolumen der Hörkapsel (16) mit dem Außenvolumen des Handapparates (3) verbindet, wobei der Kanal (17) außerhalb der eigentlichen Hörmuschel austritt.

2. Anordnung nach Anspruch 1,
**dadurch gekennzeichnet,**
**daß** der Kanal (17) an der Handapparateoberseite austritt.

3. Anordnung nach Anspruch 1 oder 2,
**dadurch gekennzeichnet,**
**daß** ein akustisch niederimpedanter Aufbau vorgesehen ist, bei dem innerhalb der Auflagefläche des Ohres (12), welche einen Kreis mit einem Durchmesser von 25 mm bildet, welcher den Schallaustritt der Hörkapsel (16) enthält, in der Gehäusewand des Handapparates eine mit dem Gehäuseinneren verbundene Lecköffnung (19) vorgesehen ist.

4. Anordnung nach Anspruch 1 oder 2,
**dadurch gekennzeichnet,**
**daß** ein akustisch niederimpedanter Aufbau vorgesehen ist, bei dem innerhalb der Auflagefläche des Ohres (12), welche einen Kreis mit einem Durchmesser von 25 mm bildet, welcher den Schallaustritt der Hörkapsel (16) enthält, in der Gehäusewand des Handapparates (15) eine Lecköffnung (20) vorgesehen ist, wobei der Raum hinter der Lecköffnung (20) mit dem Kanalinnenraum (17) verbunden ist, während er gegenüber dem übrigen Gehäuseinneren des Handapparates (15) abgedichtet ist.

## Claims

1. Arrangement for suppressing acoustic reflection in telephone handsets,
**characterised in that**
a channel (17) sealed off from the inside of the housing connects the backward spatial volume of the receiver capsule (16) to the external volume of the handset (3), the channel (17) exiting outside the actual earpiece.

2. Arrangement according to Claim 1,
**characterised in that**
the channel (17) exits at the top of the handset.

3. Arrangement according to Claim 1 or 2,
**characterised in that**
an acoustically low-impedance structure is provided, with which a leakage opening (19) connected to the inside of the housing is provided in the housing wall of the handset, within the area of contact with the ear (12), forming a circle with a 25 mm diameter, which contains the sound outlet of the receiver capsule (16).

4. Arrangement according to Claim 1 or 2,
**characterised in that** an acoustically low-impedance structure is provided, with which a leakage opening (20) is provided in the housing wall of the handset (15), within the area of contact with the ear (12), forming a circle with a 25 mm diameter, which contains the sound outlet of the receiver capsule (16), the space behind the leakage opening (20) being connected to the inside of the channel (17), while remaining shielded from the rest of the inside of the housing of the handset (15).

## Revendications

1. Agencement pour diminuer les réflexions acoustiques de combinés téléphoniques,
**caractérisé en ce qu'**un canal (17) fermé de manière étanche vis-à-vis de l'intérieur du boîtier relie le volume de l'espace situé à l'arrière de la capsule d'écouteur (16) au volume situé à l'extérieur du combiné (3), le canal (17) débouchant à l'extérieur de l'écouteur proprement dit.

2. Agencement selon la revendication 1, **caractérisé en ce que** le canal (17) débouche sur le côté supérieur du combiné.

3. Agencement selon la revendication 1 ou 2, **caractérisé en ce qu'**il présente une structure à basse impédance acoustique dans laquelle une ouverture de fuite (19) reliée à l'intérieur du boîtier est prévue dans la paroi du boîtier du combiné à l'intérieur de la surface d'appui de l'oreille (12) qui forme un cercle d'un diamètre de 25 mm qui contient la sortie acoustique de la capsule d'écouteur (16).

4. Agencement selon la revendication 1 ou 2, **caractérisé en ce qu'**il présente une structure à basse impédance acoustique dans laquelle une ouverture de fuite (20) est prévue dans la paroi du boîtier du combiné (15) à l'intérieur de la surface d'appui de l'oreille (12) qui forme un cercle d'un diamètre de 25 mm qui contient la sortie acoustique de la capsule d'écouteur (16), l'espace situé derrière l'ouverture de fuite (20) étant relié à l'espace intérieur du canal (17) tout en étant fermé de manière étanche par rapport au reste de l'intérieur du boîtier du combiné (15).
